# EUROPÄISCHE PATENTSCHRIFT

(11) **EP 1 185 381 B1**
(45) Veröffentlichungstag und Bekanntmachung des Hinweises auf die Patenterteilung: **04.02.2004**
(21) Anmeldenummer: 00925268.5
(22) Anmeldetag: 09.05.2000
(51) Int. Cl.: B05D 5/06, B05D 7/02, B44F 1/02

(54) **VERFAHREN ZUR HERSTELLUNG VON FÜR KRAFTFAHRZEUGE GEEIGNETE DEKORATIV LACKIERTEN KUNSTSTOFF-FORMTEILEN, UND HERGESTELLTE FORMTEILE**
METHOD OF MANUFACTURING DECORATIVELY ENAMELED PLASTIC MOLDED PARTS FOR MOTOR VEHICLES, AND MANUFACTURED PARTS
PROCEDE DE FABRICATION DE PIECES MOULEES EN PLASTIQUE A PEINTURE DECORATIVE CONVENANT A DES VEHICULES AUTOMOBILES, ET PIECES FABRIQUEES

(30) Priorität: 10.05.1999 DE 19921646
(43) Veröffentlichungstag der Anmeldung: 13.03.2002
(73) Patentinhaber: E.I. DU PONT DE NEMOURS AND COMPANY, Wilmington Delaware 19898 (US)
(72) Erfinder: BLUM, Joachim, D-42897 Remscheid (DE); MASS, Manfred, D-42897 Remscheid (DE); STEGEN, Helga, D-42277 Wuppertal (DE)
(74) Vertreter: Gille Hrabal Struck Neidlein Prop Roos
(86) Internationale Anmeldenummer: PCT/EP2000/004121
(87) Internationale Veröffentlichungsnummer: WO 2000/067920

(56) Entgegenhaltungen:
- WO-A-95/23688

## Beschreibung

Die Erfindung betrifft ein Verfahren zur Herstellung von lackierten Kunststoff-Formteilen, insbesondere für den Kraftfahrzeugbereich, die nach dem Verfahren erhaltenen Kunststoff-Formteile und ihre Verwendung.

Nicht zuletzt aus Gewichtsersparnisgründen finden Kunststoffteile vermehrt Verwendung im Automobilbau. Vielfach ist die sichtbare Oberfläche der Kunststoffteile zwecks Erzielung einer dekorativen Wirkung mit einer farb- und/oder effektgebenden Lackierung versehen.

Grundsätzlich problematisch ist die Anfälligkeit im Automobilbau verwendeter, farbig und/oder effektlackierter Kunststoffteile gegenüber mechanischen Einflüssen. Die Kunststofflackierungen sind außerordentlich verkratzungsanfällig und die Schlagfestigkeit farb- und/oder effektlackierter Kunststoffteile ist gering, insbesondere bei niedrigen Temperaturen. Diese Schwächen treten insbesondere bei farbig und/oder effektlackierten Kunststoffstoßfängern, -rammschutzleisten oder -beplankungen in Erscheinung; die Kunststoffteile nehmen schon bei kleinen Berührungen, beispielsweise durch versehentliches Anstoßen beim Einparken des Kraftfahrzeugs erheblichen Schaden, beispielsweise durch optisch auffallende Verkratzungen der äußeren Lackierung oder sogar durch Materialbruch des Kunststoffteils.

Die WO 95/23688 beschreibt dekorative Kunststoffteile mit einem vor Korrosion geschützten metallverspiegelten Bereich, die durch Aufkleben einer einen metallverspiegelten Bereich aufweisenden Schicht aus einem Polymer-Material auf ein Kunststoffsubstrat mit einem gegebenenfalls pigmentierten Klebstoff hergestellt werden.

Aufgabe der Erfindung ist die Bereitstellung eines Verfahrens zur Herstellung dekorativ lackierter Kunststoffteile mit besserer Eignung für die Verwendung im Kraftfahrzeugbereich, insbesondere im Automobilbau außen am Fahrzeug sowie von nach dem Verfahren hergestellten Kunststoff-Formteilen.

Die Aufgabe kann gelöst werden durch die Bereitstellung eines Verfahrens zur Herstellung lackierter Kunststoff-Formteile, bei dem transparente Kunststoffteile auf der Rückseite farb- und/oder effektgebend lackiert werden, so daß der Farbeindruck von der Vorderseite her wahrgenommen werden kann.

Gegenstand der Erfindung ist daher ein Verfahren zur Herstellung von lackierten Kunststoff-Formteilen, worin eine farb- und/oder effektgebenden Lackierung direkt auf die unbehandelte oder vorbehandelte, dem Betrachter abgewandte Seite eines transparenten Kunststoff-Formteils aufgetragen wird, sowie die nach diesem Verfahren hergestellten Kunststoff-Formteile, die insbesondere für den Kraftfahrzeugbereich geeignet sind und die dadurch gekennzeichnet sind, daß sie aus transparentem Kunststoff bestehen und auf der vom Betrachter abgewandten Seite (Rückseite) mit einer farbund/oder effektgebenden Lackierung versehen sind.
Bei der dem Betrachter abgewandten Seite der Kunststoff-Formteile handelt es sich um die nach Montage, beispielsweise am Kraftfahrzeug, der sichtbaren Oberfläche gegenüberliegenden Seite, die nachfolgend auch kurz als nicht sichtbare Seite oder Rückseite bezeichnet wird.
Bei den dekorativ lackierten Kunststoffteilen kann es sich um beliebige Kunststoff-Formteile handeln, wie sie beispielsweise im Kraftfahrzeugbereich serienmäßig oder als Sonderausstattung verwendet werden, beispielsweise Stoßfänger, Rammschutzleisten, Seitenbeplankungen, Schweller, Spiegelgehäuse, Türgriffe, Motorhauben, Kofferdeckel, Hecktüren, Kotflügel, Spoiler, Radkappen.
Es ist erfindungswesentlich, daß die Kunststoffteile aus transparentem, bevorzugt vollständig transparentem Kunststoffmaterial bestehen. Geeignete transparente Kunststoffe finden sich sowohl unter an sich bekannten Elastomeren als auch unter an sich bekannten Thermoplasten und Duroplasten, bevorzugt sind dabei amorphe Kunststoffe. Beispiele sind Polykondensate, Polyadditionsprodukte und Polymerisate wie Polycarbonate, Polyester wie z.B. Polybutylenterephthalat, Polyamide, Silikonkunststoffe, Polyether wie z.B. Polyoxymethylen, Polypropylenoxid oder Polybutylenoxid, Polyurethane, Polyharnstoffe, Polyolefine, Poly(meth)acrylatkunststoffe wie Polymethylmethacrylat, Polystyrol, Acrylnitril/Styrolund Acrylnitril/Styrol/Acrylat-Kunststoffe und beliebige transparente Blends. Bevorzugt sind Polycarbonate, Polyester, Polymethylmethacrylat, Polyamide, Acrylnitril/Styrol/Acrylat-Kunststoffe.

Die transparenten Kunststoffteile können transparente Pigmente oder Hilfsstoffe enthalten wie z.B. Siliziumdioxid, Mikrotitandioxid, Glasfasern. Dabei liegen die Brechzahlen von Kunststoffmaterial und transparentem Pigment oder Hilfsstoff bevorzugt nahe bei einander oder entsprechen einander.

Zur Erzielung besonderer Effekte kann die an sich farblose Kunststoffmasse der transparenten Kunststoffteile beispielsweise mittels Farbstoffen transparent eingefärbt sein und/oder Absorptionspigmente und/oder Effektpigmente in geringen, nichtdeckenden Mengenanteilen enthalten.

Sowohl die vordere sichtbare Seite als auch die Rückseite der transparenten Kunststoffteile können eine vollständig glatte hochglänzende Oberfläche aufweisen oder die Oberflächen besitzen zur Erzielung besonderer Effekte Erhebungen bzw. Vertiefungen, beispielsweise in Form von eingeprägten Mustern oder Logos. Bevorzugt ist die Oberfläche der Rückseite glatt. Die vordere sichtbare Oberfläche weist keine farb- und/oder effektgebende Decklackierung auf. Sie kann unbeschichtet oder transparent beschichtet sein, beispielsweise mit einer transparenten Lackierung, insbesondere mit einer farblosen Klarlackschicht versehen sein. Als transparente Beschichtung kann anstelle einer Lackierung aber auch eine transparente Kunststoffolie dienen, die auf die Vorderseite des transparenten Kunststoffteils aufgeklebt wird. Als transparente Kunststoffolien sind farblos transparente oder transparent eingefärbte Kunststoffolien geeignet. Die transparenten Kunststoffolien können auch Effektpigmente enthalten. Ferner können die transparenten Kunststoffolien auch nichtdeckend lackiert und/oder bedruckt (z.B. in Form eines Musters oder Bildes) sein. Als nicht-deckende Folienlackierung kommen sowohl Klarlackschichten als auch ein- oder mehrschichtige transparente Farb- und/oder Effektlackierungen in Frage.

Es ist erfindungswesentlich, daß die transparenten Kunststoffteile auf ihrer Rückseite mit einer farb- und/oder effektgebenden ein- oder mehrschichtigen deckenden Lackierung versehen sind. Dazu wird eine farb- und/oder effektgebende Überzugsschicht direkt auf die unbehandelte oder vorbehandelte Rückseite des Kunststoffteils aufgetragen.

Eine Vorbehandlung der Rückseite der transparenten Kunststoffteile ist insbesondere dann zweckmäßig, wenn es sich um Kunststoffe handelt, auf denen Lacküberzüge erfahrungsgemäß nur schwach haften. Die Vorbehandlung kann beispielsweise darin bestehen, daß die farbig und/oder effektzulackierende Rückseite der transparenten Kunststoffteile physikalisch und/oder chemisch behandelt und/oder mit einer transparenten haftvermittelnden Überzugsschicht versehen wird. Dabei handelt es sich um aus dem Bereich der Lackierung von Kunststoffteilen wohlbekannte Methoden zur Erzeugung einer ausreichenden Haftung. Beispiele für physikalische bzw. chemische Methoden, die zur Behandlung der Rückseite der transparenten Kunststoffteile angewendet werden können, sind Coronabehandlung, Plasmabehandlung, Beflammen, Bestrahlung mit ultraviolettem Licht, gegebenenfalls in Gegenwart von zu Radikalen zerfallenden Photoinitiatoren, Ätzangriff mit aggressiven chemischen Agenzien, beispielsweise mit Fluor oder Schwefeltrioxid. Dabei kann nur eine oder eine Kombination von Behandlungsmethoden angewendet werden. Dies kann zugleich oder nacheinander geschehen. Beflammen oder Plasmabehandlung sind die bevorzugten Behandlungsmethoden. Besonders bevorzugt ist es jedoch, eine transparente haftvermittelnde Überzugsschicht auf die gegebenenfalls physikalisch und/oder chemisch behandelte Rückseite zu applizieren, bevor die farb- und/oder effektgebende Überzugsschicht aufgebracht wird. Bevorzugt ist die Rückseite dabei nicht physikalisch und/oder chemisch behandelt und es wird nur eine transparente haftvermittelnde Überzugsschicht aufgetragen, bevor die farb- und/oder effektgebende Überzugsschicht aufgebracht wird. Die Applikation der transparenten haftvermittelnden Überzugsschicht kann bevorzugt durch Spritzen erfolgen.

Die transparente haftvermittelnde Überzugsschicht kann aus einem üblichen haftvermittelnden Überzugsmittel aufgebracht werden. Bei den haftvermittelnden Überzugsmitteln handelt es sich um flüssige Überzugsmittel auf wäßriger Basis oder auf der Basis organischer Lösemittel. Es handelt sich beispielsweise um im Bereich der Kunststofflackierung übliche Haftprimer, beispielsweise Epoxid/Amin- oder Polyurethansysteme. Bevorzugt enthalten die transparenten haftvermittelnden Überzugsmittel einen oder mehrere haftvermittelnd wirkende Bestandteile. Dabei können die haftvermittelnden Komponenten als solche allein oder als Additiv in Kombination mit Bindemitteln oder Bindemittelsystemen enthalten sein. Der Mengenanteil an haftvermittelnder Komponente im haftvermittelnden Überzugsmittel beträgt beispielsweise zwischen 2 und 25, bevorzugt zwischen 3 und 20 Gew.-%. Insbesondere handelt es sich bei den haftvermittelnden Überzugsmitteln um solche, wie sie aus dem Bereich der Lackierung von Kunststoffteilen aus Polyolefinkunststoffen, wie beispielsweise Polyethylen oder Polypropylen bekannt sind oder dafür empfohlen werden. Sie werden bevorzugt durch Spritzen aufgetragen, im allgemeinen in von der Art des haftvermittelnden Überzugsmittels abhängiger Trockenschichtdicke, beispielsweise zwischen 1 und 30 µm. Vor der weiteren Überlackierung mit dem farbund/oder effektgebenden Überzugsmittel werden die aus den haftvermittelnden Überzugsmitteln erzeugten transparenten haftvermittelnden Überzugsschichten in der Regel getrocknet oder, falls ein chemisch härtbares Bindemittelsystem enthalten ist, ausgehärtet, beispielsweise bei Temperaturen zwischen 20 und 130°C.

Beispiele für bevorzugte haftvermittelnd wirkende Komponenten sind chlorierte und/oder beispielsweise durch Maleinisierung (Umsetzung mit Maleinsäureanhydrid) mit Carboxylgruppen versehene und gegebenenfalls chemisch weiter modifizierte Polyolefine. Bevorzugt sind Chlor enthaltende Polyolefine. Sie besitzen beispielsweise zahlenmittlere Molmassen von 5000 bis 50000. Ihr Chlorgehalt beträgt beispielsweise von 10 bis 40 Gew.-%.

Die Erfindung betrifft daher in einer Ausführungsform auch ein Verfahren zur Herstellung der erfindungsgemäßen Kunststoff-Formteile, das dadurch gekennzeichnet ist, daß ein transparentes Kunststoff-Formteil auf seiner, dem Betrachter abgewandten Seite, einer physikalischen und/oder chemischen Behandlung zur Haftvermittlung unterzogen und/oder mit einer transparenten haftvermittelnden Überzugsschicht versehen und anschließend mit einer farb- und/oder effektgebenden Lackierung versehen wird.

In einer weiteren Ausführungsform betrifft die Erfindung auch ein Verfahren zur Herstellung der erfindungsgemäßen Kunststoff-Formteile, das dadurch gekennzeichnet ist, daß ein transparentes Kunststoff-Formteil auf seiner, dem Betrachter abgewandten Seite direkt mit einer farb- und/oder effektgebenden Lackierung versehen wird.

Erfindungsgemäß wird eine farb- und/oder effektgebende Überzugsschicht in einer Trockenschichtdicke von beispielsweise 10 bis 30 µm auf die gegebenenfalls wie vorstehend erläutert physikalisch und/oder chemisch behandelte und/oder mit einer transparenten haftvermittelnden Überzugsschicht versehene Rückseite der transparenten Kunststoffteile aufgetragen, dies kann beispielsweise bevorzugt durch Spritzen erfolgen. Als farb- und/oder effektgebende Überzugsmittel können übliche Decklacke oder bevorzugt übliche Basislacke, wie sie zur Herstellung farb- und/oder effektgebender Basislackschichten innerhalb von Basislack/Klarlack-Zweischichtlackierungen eingesetzt werden und in großer Zahl beispielsweise aus der Patentliteratur bekannt sind, verwendet werden.

Die Basislacke können physikalisch trocknend oder unter Ausbildung kovalenter Bindungen vernetzbar sein. Bei den unter Ausbildung kovalenter Bindungen vernetzenden Basislacken kann es sich um übliche selbst- oder fremdvernetzende Systeme handeln. Bei den Basislacken handelt es sich um flüssige Überzugsmittel. Es kann sich um ein- oder mehrkomponentige Überzugsmittel handeln, einkomponentige sind bevorzugt. Es kann sich um Basislacke auf Basis organischer Lösemittel handeln oder es handelt sich bevorzugt um Wasserbasislacke.

Bei den Basislacken handelt es sich um übliche Lacksysteme, die ein oder mehrere übliche Bindemittel als filmbildende Bindemittel enthalten. Sie können, falls die Bindemittel nicht selbstvernetzend oder selbsttrocknend sind, gegebenenfalls auch Vemetzer enthalten. Sowohl die Bindemittelkomponente als auch die Vernetzerkomponente unterliegen keinerlei Beschränkung. Als filmbildende Bindemittel können beispielsweise Polyester-, Polyurethan- und/oder (Meth)acrylcopolymerharze verwendet werden. Die Auswahl der gegebenenfalls enthaltenen Vernetzer ist unkritisch, sie richtet sich nach der Funktionalität der Bindemittel.

Die Basislacke enthalten neben den üblichen physikalisch trocknenden und/oder chemisch vernetzenden Bindemitteln anorganische und/oder organische Buntpigmente und/oder Effektpigmente, wie z.B. Titandioxid, Eisenoxidpigmente, Ruß, Azopigmente, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferphthalocyaninpigmente.

Weiterhin können die Basislacke lackübliche Additive enthalten, wie z.B. Füllstoffe, Katalysatoren, Verlaufsmittel, Haftvermittler, Antikratermittel oder Lichtschutzmittel gegebenenfalls in Kombination mit Antioxidantien.

Insbesondere wenn die erfindungsgemäßen Kunststoffteile im Farbton mit dem Karossenfarbton übereinstimmen sollen, ist es zweckmäßig, wenn zur Lackierung der Rückseite der transparenten Kunststoffteile derselbe Basislack verwendet wird wie zur Lackierung der Kraftfahrzeugkarosserie.

Bei der erfindungsgemäß auf der Rückseite der transparenten Kunststoffteile aufgebrachten farb- und/oder effektgebenden Überzugsschicht kann es sich um eine abschließende Überzugsschicht handeln. Als Abschluß können aber auch eine oder mehrere weitere Überzugsschichten auf die farb- und/oder effektgebende Überzugsschicht aufgetragen und/oder eine oder mehrere Schutzfolien aufgeklebt werden. Beide Maßnahmen können insbesondere dem Schutz, beispielsweise dem Schutz vor physikalischen und/oder chemischen Einflüssen auf die darunter befindliche farb- und/oder effektgebende Überzugsschicht dienen. Bei der weiteren Überzugsschicht bzw. bei der Schutzfolie kann es sich um eine transparente oder deckende, lichtdichte Überzugsschicht bzw. um eine transparente oder deckende, lichtdichte Folie handeln. Die Verwendung einer deckenden, lichtdichten Überzugsschicht bzw. Folie ist insbesondere dann zweckmäßig, wenn die farbund/oder effektgebende Überzugsschicht in nicht-deckender Schichtdicke aufgetragen ist.

Die Erfindung betrifft auch die Verwendung der erfindungsgemäßen dekorativ lackierten Kunststoffteile im Kraftfahrzeugbereich, insbesondere für Anwendungen außen am Fahrzeug, beispielsweise als Stoßfänger, Rammschutzleisten, Seitenbeplankungen, Schweller, Spiegelgehäuse, Türgriffe, Motorhauben, Kofferdeckel, Hecktüren, Kotflügel, Spoiler, Radkappen.

Die erfindungsgemäßen Kunststoffteile werden außen am Kraftfahrzeug montiert, beispielsweise angeclipst, angeschraubt oder an- bzw. aufgeklebt. Die Montage erfolgt so, daß die farbig und/oder effektlackierte Rückseite der erfindungsgemäßen Kunststoffteile vom Auge des Betrachters abgewandt angebracht wird. Die erfindungsgemäßen Kunststoffteile können exakt mit der Wagenfarbe übereinstimmen oder der Farbton weicht von der Wagenfarbe ab, beispielsweise kann das Kunststoffteil einen Kontrastfarbton zum eigentlichen Karossenfarbton aufweisen.

Die erfindungsgemäßen Kunststoffteile stellen sich dem Auge des Betrachters als dekorative Kraftfahrzeugteile dar. Im Falle effektlackierter erfindungsgemäßer Kunststoffteile fällt die hohe Effektausprägung auf. Die erfindungsgemäßen Kunststoffteile sind weniger empfindlich gegenüber Verkratzungen und mechanisch stabiler als entsprechende auf der sichtbaren Oberfläche farbig und/oder effektlackierte Kunststoffteile des Standes der Technik.

### Beispiel 1 (Vergleich)

Auf eine Probeplatte aus grau eingefärbtem Polycarbonat wird ein schwarzer Wasserbasislack in einer deckenden Trockenschichtdicke von 18 µm aufgespritzt. Nach 5 Minuten Ablüften bei 80°C wird mit einem handelsüblichen Zweikomponenten-PU-Klarlack durch Druckluftspritzen in einer Trockenschichtdicke von 40 µm überlackiert und 30 Minuten bei 85°C (Ofentemperatur) getrocknet. Durch Schaben mit einer Messerklinge wird die Lackierung verkratzt und teilweise abgeschabt. Die Beschädigung fällt visuell unabhängig vom Betrachtungswinkel und auch aus größerer Entfernung von 1 bis 2 Metern stark auf, der graue Untergrund ist an der beschädigten Stelle sichtbar.

### Beispiel 2 (Vergleich)

Auf eine Probeplatte aus klarem transparentem Polycarbonat wird ein schwarzer Wasserbasislack in einer deckenden Trockenschichtdicke von 18 µm aufgespritzt. Nach 5 Minuten Ablüften bei 80°C wird mit einem handelsüblichen Zweikomponenten-PU-Klarlack durch Druckluftspritzen in einer Trockenschichtdicke von 40 µm überlackiert und 30 Minuten bei 85°C (Ofentemperatur) getrocknet. Durch Schaben mit einer Messerklinge wird die Lackierung verkratzt und teilweise abgeschabt. Die Beschädigung fällt visuell unabhängig vom Betrachtungswinkel und auch aus größerer Entfernung von 1 bis 2 Metern stark auf.

### Beispiel 3 (erfindungsgemäß)

Auf eine Probeplatte aus klarem transparentem Polycarbonat wird ein schwarzer Wasserbasislack in einer deckenden Trockenschichtdicke von 18 µm aufgespritzt. Nach 5 Minuten Ablüften bei 80°C wird mit einem handelsüblichen Zweikomponenten-PU-Klarlack durch Druckluftspritzen in einer Trockenschichtdicke von 40 µm überlackiert und 30 Minuten bei 85°C (Ofentemperatur) getrocknet. Durch Schaben mit einer Messerklinge wird die unlackierte Seite der Probeplatte an einer Stelle durch Schaben verkratzt. Die Beschädigung fällt visuell nur bei nahezu senkrechter Betrachtung auf Bei Betrachtung aus größerer Entfernung von 1 bis 2 Metern ist die beschädigte Stelle visuell unauffällig. Der Farbeindruck bleibt erhalten, da die farbgebende Lackierung auf der Rückseite unbeschädigt ist.

### Beispiel 4 (erfindungsgemäß)

Auf eine Probeplatte aus klarem transparentem Polycarbonat wird ein schwarzer Wasserbasislack in einer deckenden Trockenschichtdicke von 18 µm aufgespritzt. Nach 5 Minuten Ablüften bei 84°C wird mit einem handelsüblichen Zweikomponenten-PU-Klarlack durch Druckluftspritzen in einer Trockenschichtdicke von 40 µm überlackiert. Zusätzlich wird auch die gegenüberliegende unbeschichtete Seite der Probeplatte mit dem Zweikomponenten-PU-Klarlack in 40 µm Trockenschichtdicke überlackiert. Anschließend wird 30 Minuten bei 85°C (Ofentemperatur) getrocknet. Durch Schaben mit einer Messerklinge wird die direkt auf die Kunststoffoberfläche aufgebrachte Klarlackschicht verkratzt und teilweise abgeschabt. Die Beschädigung fällt visuell nur bei nahezu senkrechter Betrachtung auf. Bei Betrachtung aus größerer Entfernung von 1 bis 2 Metern ist die beschädigte Stelle visuell unauffällig. Der Farbeindruck bleibt erhalten, da die farbgebende Lackierung auf der Rückseite unbeschädigt ist.

## Patentansprüche

1. Verfahren zur Herstellung von lackierten Kunststoff-Formteilen, **dadurch gekennzeichnet, daß** eine farb- und/oder effektgebenden Lackierung direkt auf die unbehandelte oder vorbehandelte, dem Betrachter abgewandte Seite eines transparenten Kunststoff-Formteils aufgetragen wird.

2. Verfahren zur Herstellung von lackierten Kunststoff-Formteilen nach Anspruch 1, **dadurch gekennzeichnet, daß** das transparente Kunststoff-Formteil auf seiner dem Betrachter abgewandten Seite einer physikalischen und/oder chemischen Behandlung zur Haftvermittlung unterzogen und/oder mit einer transparenten haftvermittelnden Überzugsschicht versehen und anschließend mit der farbund/oder effektgebenden Lackierung versehen wird.

3. Verfahren zur Herstellung von lackierten Kunststoff-Formteilen nach Anspruch 1 oder 2, **dadurch gekennzeichnet, daß** auf die farb- und/oder effektgebende Lackierung eine oder mehrere weitere Überzugsschichten und/oder Schutzfolien aufgebracht werden.

4. Verfahren zur Herstellung von lackierten Kunststoff-Formteilen nach einem der Ansprüche 1 bis 3, wobei es sich um Kunststoff-Formteile für den Kraftfahrzeugbereich in der Form von Stoßfängern, Rammschutzleisten, Seitenbeplankungen, Schwellern, Spiegelgehäusen, Türgriffen, Motorhauben, Kofferdeckeln, Hecktüren, Kotflügeln, Spoilern und Radkappen handelt.

5. Verfahren zur Herstellung von lackierten Kunststoff-Formteilen nach Anspruch 4, **dadurch gekennzeichnet, daß** sie auf ihrer dem Betrachter abgewandten Seite mit dem gleichen Basislack lackiert sind, der zur Lackierung der übrigen Kraftfahrzeugkarosserie verwendet wird.

6. Verfahren zur Herstellung von lackierten Kunststoff-Formteilen nach einem der Ansprüche 1 bis 5, **dadurch gekennzeichnet, daß** die dem Betrachter zugewandte Seite mit einer transparenten Beschichtung versehen ist.

7. Kunststoff-Formteile, erhalten nach dem Verfahren nach einem der Ansprüche 1 bis 6.

8. Verwendung der Kunststoff-Formteile nach Anspruch 7 im Kraftfahrzeugbereich.

9. Verwendung nach Anspruch 8 auf der Außenseite von Kraftfahrzeugen.

## Claims

1. Process for the production of lacquered plastic mouldings, **characterised in that** a colouring or special-effect lacquer coating is applied directly on to the untreated or pretreated side of a transparent plastic moulding facing away from the observer.

2. Process for the production of lacquered plastic mouldings according to claim 1, **characterised in that** the transparent plastic moulding is subjected to a physical and/or chemical adhesion-promoting treatment on the side facing away from the observer and/or is provided with a transparent adhesion-promoting coating layer and then with the colouring and/or special-effect lacquer coating.

3. Process for the production of lacquered plastic mouldings according to claim 1 or 2, **characterised in that** one or more additional coating layers and/or protective films are applied on to the colouring and/or special-effect lacquer coating.

4. Process for the production of lacquered plastic mouldings according to any one of claims 1 to 3, wherein the plastic mouldings are plastic mouldings for the automotive sector in the form of bumpers, side bumper panels, side panels, door sills, mirror housings, door handles, bonnets, boot lids, tailgates, mudguards, spoilers and hubcaps.

5. Process for the production of lacquered plastic mouldings according to claim 4, **characterised in that** they are lacquered on the side facing away from the observer with the same basecoat used for lacquering the rest of the vehicle body.

6. Process for the production of lacquered plastic mouldings according to any one of claims 1 to 5, **characterised in that** the side facing the observer is provided with a transparent coating.

7. Plastic mouldings obtained by the process according to any one of claims 1 to 6.

8. Use of the plastic mouldings according to claim 7 in the automotive sector.

9. Use according to claim 8 on the exterior of vehicles.

## Revendications

1. Procédé de préparation de pièces moulées en plastique peintes, **caractérisé en ce que** l'on applique une peinture colorante et/ou donnant un effet, directement sur la face tournée vers l'observateur, non traitée ou prétraitée, d'une pièce moulée en plastique transparente.

2. Procédé de préparation de pièces moulées en plastique peintes selon la revendication 1, **caractérisé en ce que** la pièce moulée en plastique transparente est soumise sur la face tournée vers l'observateur, à un traitement physique et/ou chimique pour l'adhésivité et/ou munie d'une couche de revêtement transparente d'adhésivité et ensuite, est munie de la peinture colorante et/ou donnant un effet.

3. Procédé de préparation de pièces moulées en plastique peintes selon la revendication 1 ou 2, **caractérisé en ce que** sur la peinture colorante et/ou donnant un effet, sont appliquées une ou plusieurs couches de revêtement et/ou feuilles protectrices.

4. Procédé de préparation de pièces moulées en plastique peintes selon l'une quelconque des revendications 1 à 3, où les pièces moulées en plastique consistent en des pièces moulées en plastique pour l'industrie automobile sous la forme de pare-chocs, bande de protection, placage latéral, barrières, boîtier de miroir, poignée de porte, capot, couvercle de coffre, hayon, aile, déporteur et enjoliveur.

5. Procédé de préparation de pièces moulées en plastique peintes selon la revendication 4, **caractérisé en ce qu'**elles sont peintes sur la face tournée vers l'observateur avec la même peinture de fond que celle utilisée pour la peinture du reste de la carrosserie.

6. Procédé de préparation de pièces moulées en plastique peintes selon l'une quelconque des revendications 1 à 5, **caractérisé en ce que** la face opposée à l'observateur est munie d'un revêtement transparent.

7. Pièces moulées en plastique, obtenues d'après le procédé selon l'une quelconque des revendications 1 à 6.

8. Utilisation des pièces moulées en plastique selon la revendication 7, dans l'industrie automobile.

9. utilisation selon la revendication 8, sur la face extérieure de véhicules automobiles.
